# EUROPEAN PATENT APPLICATION

(11) **EP 4 302 913 A1**
(43) Date of publication of application: **10.01.2024**
(21) Application number: 23182714.8
(22) Date of filing: 30.06.2023
(51) Int. Cl.: B23K 9/04, B22F 10/22, B22F 10/25, B22F 10/50, B22F 12/37, B23K 10/02, B23K 15/00, B23K 26/342, B23K 37/04, B23K 37/06, B33Y 10/00, B33Y 30/00, B33Y 40/00

(54) **ADDITIVE MANUFACTURING SYSTEM AND METHOD FOR COMPRESSION OF MATERIAL BASED ON DETECTED TEMPERATURE**

(30) Priority: 08.07.2022 IT 202200014434
(71) Applicant: Ge Avio S.r.l., Rivalta di Torino (IT)
(72) Inventor: PERADOTTO, Edoardo Maria, 10040 Rivalta di Torino (IT)
(74) Representative: Hafner & Kohl PartmbB

(57) **Abstract**

An additive manufacturing system for forming a component including a compression rig including a compression head supporting a top compression device applying a compressive load onto a top surface of the component, a pair of temperature sensors positioned on opposite sides of the top compression device and detecting a temperature of the top surface of the component, and a pair of distance sensors positioned on opposite sides of the top compression device and detecting a distance to the top surface of the component, and a controller configured to adjust a position of the compression rig and a load applied by the top compression device based on at least one of the detected temperatures and distances.

## Description

### TECHNICAL FIELD

The present disclosure generally relates to additive manufacturing systems and, more particularly, to additive manufacturing systems and methods that can introduce compression into deposited material while simultaneously conducting material deposition.

### BACKGROUND

Additive manufacturing is a suite of emerging technologies that may be used to fabricate three-dimensional objects directly from digital models through an additive process, typically by depositing material layer upon layer and joining successive layers in place. Directed energy deposition ("DED") is a type of additive manufacturing process utilized to fabricate new components and/or to repair or add additional material to existing components. Using DED, components can be fabricated layer-by-layer using a directed flow of feedstock material from a deposition nozzle. DED apparatuses use a focused energy source, such as a laser or electron beam, to melt the feedstock material and simultaneously deposit the melted material on a specified surface, where such melted material solidifies and fuses with other deposited materials, to thereby form the component layer-by-layer.

The energy source is provided in the deposition nozzle, which includes one or more material delivery nozzles which converge at the point of material deposition and where the energy source is focused. The feedstock material is melted as it exits the deposition nozzle and is deposited on a build table or on a previously deposited layer of material.

DED apparatuses may also be configured to apply compression to each layer or a set of layers after being deposited. These types of DED apparatuses generally include a fixed build table, a large robotic arm supporting the deposition nozzle that may articulate over the table so as to deposit the layer of material from the deposition nozzle during a deposition phase, and a compression apparatus that may subsequently articulate over the build table to apply compression during a compression phase such as by, for example, peening, hammering, rolling, and the like. With this type of design, however, the deposition phase and the compression phase occur sequentially, one after another. When the deposition phase is ongoing, the compression equipment is positioned outside of the working volume waiting for conclusion of the deposition phase, and vice versa. Therefore, the total processing time of a component is the sum of the deposition time and the compression time.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a perspective view of an additive manufacturing system, according to one or more embodiments shown and described herein;
FIG. 2 schematically depicts a partial front view of a compression head of the additive manufacturing system of FIG. 1, according to one or more embodiments shown and described herein;
FIG. 3 schematically depicts a partial side view of the compression head of FIG. 2, according to one or more embodiments shown and described herein;
FIG. 4 schematically depicts a partial front view of the compression head of FIG. 2, according to one or more embodiments shown and described herein;
FIG. 5 schematically depicts a partial front view of the compression head of FIG. 2 including temperature sensors and distance sensors associated with each of a top roller, an inside roller, and an outside roller of the compression head, according to one or more embodiments shown and described herein; and
FIG. 6 schematically depicts a flowchart illustrating a method for determining a position of the compression head of FIG. 2 and a load to be applied by the top roller of the compression head, according to one or more embodiments shown and described herein

### DETAILED DESCRIPTION

Embodiments described herein are directed to additive manufacturing systems and methods for introducing compression in deposited material while simultaneously conducting material deposition. The system includes a compression rig including a compression head supporting a top roller applying a compressive load onto a top surface of a component, a pair of temperature sensors positioned on opposite sides of the top roller and detecting a temperature of the top surface of the component, and a pair of distance sensors positioned on opposite sides of the top roller and detecting a distance to the top surface of the component. The system further includes a controller configured to adjust a position of the compression rig and a load applied by the top roller based on at least one of the detected temperatures and distances. Various embodiments of the systems and the operation of the systems are described in more detail herein. Whenever possible, the same reference numerals will be used throughout the drawings to refer to the same or like parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

The total processing time of a component is the sum of the deposition time and the compression time, which can be quite time consuming and adversely impact the overall cost of manufacturing. Furthermore, compression may be applied on a material layer having variable temperature, which can cause unevenness at the microstructure level. Moreover, because of the gap in time between deposition and compression, existing DED systems and techniques cannot produce components with forging-like qualities or characteristics.

The embodiments described herein provide directed energy deposition DED additive manufacturing systems having a deposition head and compression rig that may be utilized simultaneously without interfering with each other. The presently disclosed embodiments are capable of implementing a local forging process within a DED process without adding a significant amount of time and cost.

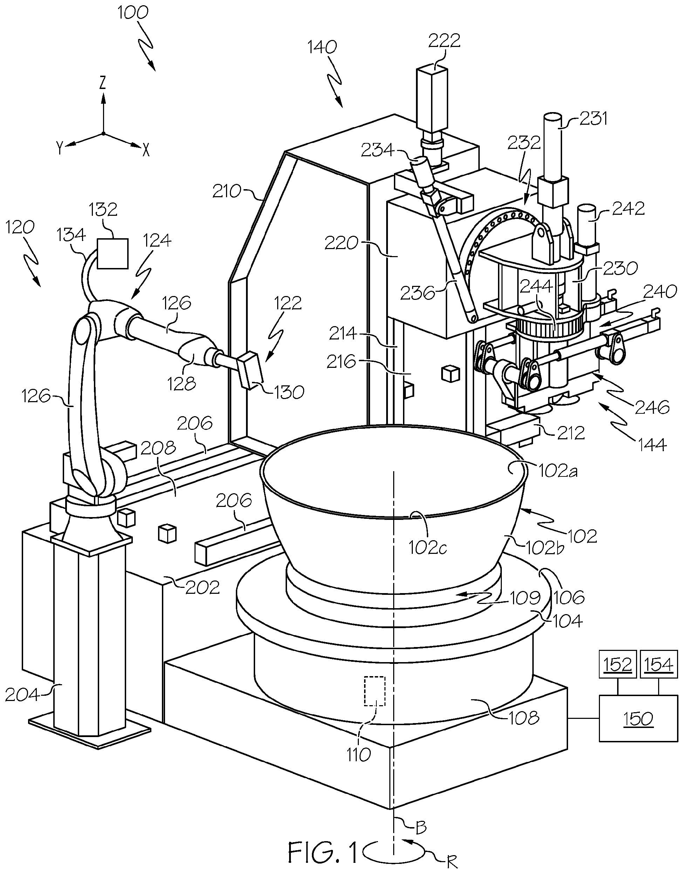

Referring now to FIG. 1, a DED additive manufacturing system 100 (hereinafter, the system 100) according to one or more embodiments of the present disclosure is illustrated. The system 100 is configured to construct or build a component 102 from a feedstock material. The component 102 has an interior side surface 102a, an opposite exterior side surface 102b, and a layer or surface 102c being built. In the illustrated example, the component 102 is a cylindrically shaped component, but in other examples, the component 102 may have a different geometry.

As illustrated, the system 100 includes a build table 104. At least a portion of the build table 104 is configured to rotate about a build table axis B of the build table 104 extending parallel to the Z-axis of the coordinate axis, thereby rotating the component 102 supported on the build table 104. Thus, the build table 104 is a rotary build table. In particular, the build table 104 defines a build surface 106 on which the component 102 is built and supported. In the illustrated embodiment, the build table 104 is disposed on a base 108. The base 108 may include an actuator 110 that rotates the build table 104 about the build table axis B in a clockwise or counterclockwise rotation direction. In the illustrated embodiment, the actuator 110 rotates the build table 104 in a counterclockwise direction R about the build table axis B. Also, as hereinafter described, the actuator 110 rotates the build table 104 at a variable rotation speed. In some examples, the base 108 is further configured to translate the build table 104 vertically along the build table axis B. In the illustrated embodiment, and as discussed in more detail herein, a platform 109 is provided on the build surface 106 of the build table 104 and the component 102 is built on the platform 109 rather than directly on the build surface 106 itself.

The system 100 also includes a deposition assembly 120. The deposition assembly 120 has a deposition head 122 through which a stream of melted feedstock material may be deposited to fabricate the component 102. As described herein, the melted feedstock material is deposited or output from the deposition head 122 at a deposition rate. The deposition assembly 120 includes a structure that adjustably and movably supports the deposition head 122. In the illustrated example, the deposition assembly 120 includes a robotic arm 124 including a plurality of links 126 that may articulate relative to each other so as to adjust the position of the deposition head 122 which is supported on a distal most link 128 of the plurality of links 126. Accordingly, it should be understood that the deposition head 122 and the build table 104 are movable relative to each other. For example, the robotic arm 124 may include one or more actuators that rotate the links 126, 128 of the robotic arm 124 relative to one another so as to move the robotic arm 124 and the deposition head 122 supported thereon relative to the build table 104. It will be appreciated that the robotic arm 124 may have various other configurations for moving and adjusting a position of the deposition head 122 in multiple degrees of freedom without departing from the present disclosure.

The deposition assembly 120 includes an energy source 130 and a material source 132. The material source 132 is configured to convey feedstock material (e.g., metal or polymer-based wires) to the deposition head 122 where it is deposited on the build table 104. In the illustrated embodiment, the material source 132 is a material spool and feeder system configured to convey a wire 134 to the deposition head 122. Thus, the material source 132 may house the wire 134 that is fed to the deposition head 122. For example, the wire 134 may be routed externally of the robotic arm 124 to the deposition head 122 or through an internal cavity of the robotic arm 124 that connects to the deposition head 122. In embodiments, the wire 134 may be a metal or polymer-based wire. In other embodiments, rather than being a material spool and feeder system configured to convey the wire 134, the material source 132 may include a pressurized powder source that conveys a pressurized stream of powder feedstock material to one or more material delivery devices (e.g., nozzles, valves, or the like) of the deposition head 122. Any suitable feedstock material capable of being used in DED processes may be used consistent with the present disclosure.

The energy source 130 may take various forms depending on the implementation. In the illustrated example, the energy source 130 is a plasma transferred arc heat source. In other examples, the energy source 130 may include a laser source and optics configured to direct a laser beam having a desired energy density to the build surface 106 of the build table 104. In some examples, the energy source 130 may include an electron emitter connected to a power supply and at least one focusing coil configured to direct an electron beam to the component 102 being constructed on the build surface 106 of the build table 104. In such embodiments, the build table 104 may be placed in a build chamber (not depicted) under a vacuum or having an oxygen-reduced environment. However, the energy source 130 may take various other forms, such as a plasma source, an electron beam source, a resistance heater, etc.

It should be understood that the system 100 may include any number of energy sources and material sources in accordance with the present disclosure. Additionally, feedstock material from the material source 132 may be routed to the deposition head 122 in various ways for emission onto the build table 104. For example, in embodiments, the wire 134 from the material source 132 may be divided into two or more material feeds that are routed through the robotic arm 124 into the deposition head 122. Each material feed may exit the deposition head 122 at a separate delivery nozzle.

In operation, one or more streams of feedstock material are fed into a path of an energy beam from the energy source 130 and emitted by the deposition head 122 as a stream of melted feedstock. In particular, at points of overlap between the energy beam and the streams of feedstock material where the energy beam possesses the requisite energy density, the energy may heat the feedstock material to a sufficient extent to form a melt pool on the build surface 106. Melted feedstock material may continuously be fed through and deposited from the deposition head 122 such that the melt pool forms a pattern corresponding to the movement pattern of the deposition head 122 and the build table 104. Movements of the deposition head 122 and the build table 104 may be determined based on a desired shape of the component 102 being built such that, as the melt pool cools, the feedstock material solidifies to form a portion of the component 102. For example, rotation of the build table 104 about the build table axis B as the deposition head 122 deposits the melt pool results in a circular shaped stream of melted feedstock material that, as the build table 104 continuously rotates over time, will layer upon itself and build a cylindrical shaped component, such as the component 102. Also, the robotic arm 124 may position the deposition head 122 radially towards or away from the build table axis B so as to create a non-circular shaped component with a varying size and diameter as illustrated.

The system 100 further includes a compression rig 140. The compression rig 140 is positioned proximate the deposition assembly 120 and is operable to continuously apply a compressive load to the deposited feedstock material which forms the component 102. As described herein, the compression rig 140 is configured to apply a compressive load to the component 102 (i.e., a compression phase) during or simultaneous with a deposition phase where the deposition assembly 120 is depositing the stream of melted feedstock material to build the component 102. In the illustrated embodiment, the compression rig 140 includes at least one actuator and a load source 144, as further described below.

Generally, the at least one actuator is configured to move and manipulate the orientation of the load source 144 relative to the portion of the component 102 to which a compressive load is to be applied. The load source 144 applies a force to the deposited material to introduce the required strain level in the deposited layer and/or improve mechanical properties of the component 102, for example, grain refinement and recrystallization.

As described herein, the robotic arm 124 is operable to position the deposition head 122 in close proximity of the load source 144 and/or the compression rig 140 is operable to position the load source 144 in close proximity of the deposition head 122. The distance between the load source 144 and the deposition head 122 may be increased if cold rolling is intended, for example, by rotating the build table 104 in an opposite clockwise direction. In this manner, it is possible to operate the deposition head 122 to deposit melted feedstock material in the melt pool while the load source 144 applies the compressive load to the component 102, with the load source 144 trailing the deposition head 122 such that the load source 144 applies load to previously deposited material a short time thereafter depending on the rotation speed of the build table 104. Thus, the compression rig 140 may apply the compressive load to the component 102 at the same time as the deposition head 122 is creating the melt pool, at least in close proximity to the melt pool of the component 102. Not only does this decrease machine cycle time, but also allows the compressive load to be applied to the component 102 at a constant temperature and at a temperature suitable to provide the component 102 with forge-like qualities. A grain refinement mechanism responsible for the forge-like properties may be utilized to provide static or dynamic recrystallization. It should be appreciated that cold rolling is capable of producing static recrystallization when the material is first strained at an ambient temperature and then re-heated with a consequent grain refinement. The re-heat in DED is provided by the most recent layer deposition to the layer(s) below.

In embodiments, the system 100 may further include a controller 150. The controller 150 may be communicatively coupled to the build table 104, the deposition assembly 120, and/or the compression rig 140. Thus, the controller 150 may be in communication with the base 108, the robotic arm 124, and/or the compression rig 140 so as to control operation of the same. For example, the controller 150 may include a processor and memory storing computer readable instructions which, when executed by the processor, dynamically controls a rotation direction and/or a rotation speed of the build table 104 about the build table axis B, a vertical translation of the build table 104 along the build table axis B, a position and orientation of the deposition head 122 in space via the robotic arm 124, a position and orientation of the load source 144 in space, and/or a magnitude of compressive load applied by the load source 144. The controller 150 may also be configured to control a feed rate of the feedstock material being fed to the deposition head 122 and/or a deposition rate at which the stream of melted feedstock material is output from the deposition head 122.

In embodiments, the system 100 may have various sensors configured to communicate with the controller 150, and the controller 150 may utilize data from the various sensors to control operation of the build table 104, the deposition assembly 120, and/or the compression rig 140 as may be desired for fabricating a particular component 102. In some examples, a sensor system (not depicted) may be provided that scans the component 102 so as to measure the dimensions of the component 102 as it is being formed. For example, lasers or cameras could be utilized to monitor the geometry of the component 102 and control the orientation of the deposition assembly 120 and/or the compression rig 140 based on that sensed data.

In embodiments, the system 100 includes one or more temperature sensors 152 and/or one or more distance sensors 154. The temperature sensor 152 may be configured to measure a surface temperature of the layer of feedstock material deposited via the deposition head 122 inside and/or outside of the melt pool. In some embodiments, the temperature sensor 152 may include at least one pyrometer or thermal camera configured to check the actual surface temperature of the deposited feedstock material. The temperature sensor 152 is communicably coupled to the controller 150 which includes control logic that evaluates the measurements of the temperature sensor 152. In embodiments, the controller 150 is configured to determine if a temperature of the feedstock material is suitable for a counterbalancing treatment via the load source 144. For example, a suitable temperature range for compressive load treatments may be determined based on material properties (e.g., plasticity, coefficient of thermal expansion, and the like) associated with the feedstock material deposited via the deposition head 122. In some embodiments, the controller 150 is configured to control relative position between the deposition head 122 and the load source 144 based on the measurements of the temperature sensor 152. For example, the controller 150 may cause movement of the deposition head 122 nearer or further from the load source 144 so as to ensure that the compressive load is being applied to material having a desired constant temperature. If a measurement of the temperature sensor 152 indicates that a previously deposited feedstock material is not suitable for compression or not uniform with previously compressed feedstock material, the controller 150 may transmit control signals to the actuator 110 of the build table 104 to vary rotation speed and/or transmit control signals to the robotic arm 124 to adjust a positioning of the deposition head 122.

Referring still to FIG. 1, in embodiments, the distance sensor 154 may be configured to measure a distance to the component 102, which can be utilized by the controller 150 to measure strain in the layer of feedstock material before and/or after the compression treatments are performed via the load source 144. The distance sensor 154 is communicably coupled to the controller 150 which includes control logic that evaluates the readings of the distance sensor 154. The distance sensor 154 may include a CORRI (coherent optical range resolved interferometry) sensor, infrared sensor, laser distance sensor, or the like. In embodiments, the controller 150 may be configured to determine if the strain measurements obtained via the distance sensor 154 are within an acceptable range to ensure high build quality. If the measurements are outside of the range, the controller 150 may modify various parameters of the build process. In embodiments, if an unacceptable amount of strain is detected, the controller 150 may modify operation of the compression rig 140 (e.g., by modifying the load application parameters such as force magnitude, and the like) to correct for the strain in the component 102 being outside of an acceptable range. In embodiments, if an unacceptable amount of strain is detected, the controller 150 may modify various operating parameters associated with the deposition head 122 (e.g., energy beam power, movement speed, material feed rate) to reduce strain in the component 102.

In the illustrated example, the deposition head 122 deposits feedstock material to fabricate the component 102 on the build table 104 while the build table 104 rotates in the counterclockwise direction R about the build table axis B. As the build table 104 continues to rotate the component 102 in the counterclockwise direction R, the feedstock material previously deposited by the deposition head 122 will encounter the load source 144 after being deposited from the deposition head 122. Thus, in the illustrated embodiment, the deposition head 122 acts on a particular portion of the component 102 before the load source 144 acts on that particular portion of the component and, similarly, the load source 144 acts on a particular portion of the component 102 after the deposition head 122 has acted on that particular portion of the component 102. Stated differently, because the build table 104 rotates in the counterclockwise direction R in the illustrated embodiment, the deposition head 122 is positioned before the load source 144 and the load source 144 is positioned after the deposition head 122. In embodiments, the temperature sensor 152 may be positioned before the load source 144 to ensure that the mechanical load is applied at the correct temperature and the distance sensor 154 may be positioned after the load source 144 to determine if the resulting strain is at a desired level (e.g., near zero for a strain-relieving treatment or a negative value if a counterbalancing treatment is being performed to promote grain refinement). In some examples, the temperature sensor 152 may be provided on the deposition assembly 120, for example, proximate the deposition head 122, so as to accurately measure temperature of the melted feedstock material being deposited therefrom. In some examples, the temperature sensor 152 may be provided proximate the load source 144. In some examples, the temperature sensor 152 may be provided in front, i.e., downstream, of the load source 144 to measure temperature of the melted feedstock material after the compression force has been applied.

In the illustrated example, the compression rig 140 is provided on a base 202, which is positioned proximate to the deposition assembly 120 and the build table 104, and the deposition assembly 120 is provided on a pedestal 204. In other examples, the deposition assembly 120 may be provided on the base 202 or elsewhere.

In embodiments, at least a pair of tracks 206 is provided on an upper surface 208 of the base 202. The compression rig 140 may include a slidable support structure 210 that is configured to slide upon the tracks 206. As shown, the slidable support structure 210 may translate on the tracks 206, relative to the base 202, laterally in the Y-axis. Also, the compression rig 140 includes an actuator 212 arranged to cause translation of the slidable support structure 210 upon the tracks 206 in the Y-axis. Accordingly, the slidable support structure 210 has a bottom side (obscured from view) that is designed to mate with and ride on the tracks 206 to allow such translation.

In embodiments, at least a pair of tracks 214 is provided on a front surface 216 of the slidable support structure 210. The compression rig 140 may include a slidable positioning structure 220 that is configured to slide upon the tracks 214. As shown, the slidable positioning structure 220 may translate on the tracks 214, relative to the slidable support structure 210, vertically in the Z-axis. Also, the compression rig 140 includes an actuator 222 arranged to cause translation of the slidable positioning structure 220 upon the tracks 214 in the Z-axis. Accordingly, the slidable positioning structure 220 has a rear side (obscured from view) that is designed to mate with and ride on the tracks 214 to allow such translation.

In embodiments, the compression rig 140 includes an adjustable support member 230 that supports a compression head 246, as discussed herein. The adjustable support member 230 is coupled to the slidable positioning structure 220 via a first rotary joint 232. The first rotary joint 232 includes a first side/plate attached to the slidable positioning structure 220 and a second side/plate attached to the adjustable support member 230, and the first rotary joint 232 is configured to permit relative rotation between the first and second sides/plates, about an axis of rotation of the first rotary joint 232. Accordingly, the adjustable support member 230 may rotate, relative to the slidable positioning structure 220, about a rotation axis of the first rotary joint 232 that, in the illustrated example, is parallel to the X-axis.

The compression rig 140 may include an actuator 234 arranged to cause rotation of the adjustable support member 230 about the rotation axis of the first rotary joint 232. In the illustrated example, the actuator 234 is supported on the slidable positioning structure 220. The actuator 234 includes a drive rod 236 and actuation of the actuator 234 causes extension or retraction of the drive rod 236 from the actuator 234. A distal end of the drive rod 236 is coupled to the second side/plate of the first rotary joint 232. Accordingly, extension or retraction of the drive rod 236 causes relative rotation between the first and second sides/plates of the first rotary joint 232 which thereby causes rotation of the adjustable support member 230 relative to the slidable positioning structure 220.

The compression head 246 is coupled to the adjustable support member 230 via a second rotary joint 240. The second rotary joint 240 defines an axis of rotation that, in the illustrate example, is parallel to Z-axis. The second rotary joint 240 includes a first side/plate attached to the adjustable support member 230 and a second side/plate attached to the compression head 246, and the second rotary joint 240 is configured to permit relative rotation between the first and second sides/plates, about its axis of rotation. Accordingly, the compression head 246 may rotate, relative to adjustable support member 230, about the rotation axis of the second rotary joint 240. Also, the compression rig 140 includes an actuator 242 arranged to cause rotation of the compression head 246 about the rotation axis of the second rotary joint 240. In the illustrated example, the actuator 242 is supported on the adjustable support member 230, and the actuator 242 includes a drive gear (obscured from view) having teeth that mesh with a driven gear 244 fixed on the second side/plate of the second rotary joint 240. The actuator 242 causes rotation of the drive gear, and rotation of the drive gear in turn rotates the driven gear 244 and the compression head 246 which is fixed to the driven gear 244.

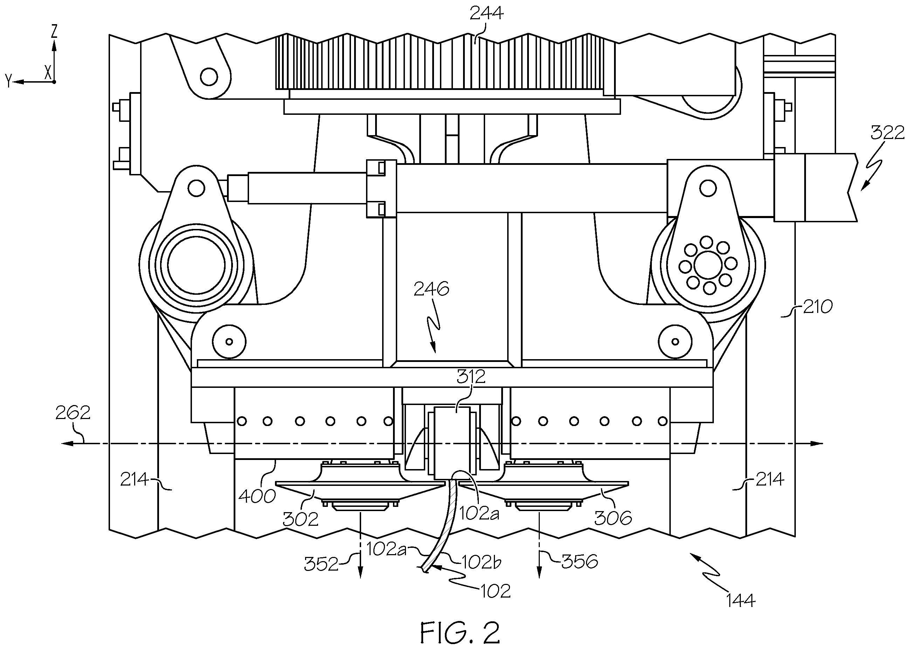

FIG. 2 illustrates a detailed front view of the compression head 246. As shown, in embodiments, the load source 144 is provided with a plurality of rollers arranged to apply compressive load to the component 102 at various portions of the component 102. The compression head 246 is configured to rotatably retain a plurality of rollers at various orientations so as to roll upon certain portions of the component 102. In some examples, as described in more detail herein, the compression head 246 is configured to measure the compressive load applied by each roller through one or more sensors operably associated with each roller.

In embodiments, the compression head 246 supports at least one inside compression device such as an inside roller 302 positioned and oriented to contact the interior side surface 102a of the component 102 and to roll there-along as the component 102 is rotated by the build table 104. The compression head 246 also supports at least one outside compression device such as an outside roller 306 positioned and oriented to contact the exterior side surface 102b of the component 102 and to roll there-along as the component 102 is rotated by the build table 104. In the illustrated example, the side rollers 302, 306 are oriented such that they are each rotatable about a respective axis of rotation 352, 356 axis extending in the Z-axis. However, it will be appreciated that the side rollers 302, 306 may rotate about axes oriented along different vectors in the X-Z plane.

In addition, the compression head 246 supports at least one top compression device such as a top roller 312 positioned and oriented to contact a top surface 102c of the component 102 and to roll there-along as the component 102 is rotated by the build table 104. It should be understood that use of the term "top surface" refers to an uppermost surface or layer of the component 102. As such, the top surface 102c of the component 102 is continually changing with each successive layer of material deposited by the deposition head 122. Here, the top roller 312 is oriented such that it is rotatable about an axis extending in the X-axis. However, it will be appreciated that the inside roller 302, the outside roller 306, and the top roller 312 may rotate about axes oriented along different vectors in the X-Z plane.

The top roller 312 may provide compression to the top surface 102c of the component 102 via actuation of a linear actuator 231 (FIG. 1) which may be operated to drive the top roller 312 rotatably supported therein toward the component 102, for example, in the Z-axis. In embodiments, the linear actuator 231 extends through an aperture formed in the compression head 246 to permit the top roller 312 to move in the Z-axis relative to the side rollers 302, 306. Thus, the side rollers 302, 306 pinch the opposite sides of the component 102 via lateral compression while the top roller 312 presses the top surface 102c of the component 102 via vertical compression. In embodiments, load sensors may be operatively associated with each of the side rollers 302, 306 and the top roller 312, so as to determine the load applied thereby.

In the illustrated example, the compression head 246 includes a frame 400 configured to support the side rollers 302, 306. The frame 400 is fixed to the driven gear 244 such that it rotates with the driven gear 244 upon actuation of the actuator 242 as described above. As shown, the side rollers 302, 306 are each rotatably coupled to the frame 400 such that each of the side rollers 302, 306 may rotate about the respective axis of rotation 352, 356. Also, as discussed in more detail herein, the side rollers 302, 306 may be pinched together or expanded apart along an axis 262 which extends parallel to the Y-axis via one or more compression actuators 322 supported on the frame 400. In addition, the top roller 312 may be pressed upward or downward in a direction parallel with the axes of rotation 352, 356 via the linear actuator 231 (FIG. 1) which may be supported on the adjustable support member 230. Additionally, the axis 262 is offset and may be perpendicular to the axes of rotation 352, 356.

Each of the side rollers 302, 306 and the top roller 312 are freely rotatable about their respective axes of rotation, and they are each rotated when brought into contact with their respective portion of the component 102 that they are designed to contact (i.e., the interior side surface 102a, the exterior side surface 102b, and the top surface 102c of the component 102, respectively) and as the component 102 is rotated. Thus, rotation of the component 102 causes roller rotation and the rollers need not include any separate drive train(s) to cause their independent rotation. However, in some examples, any one or more of the side rollers 302, 306 and the top roller 312 may be powered.

As discussed herein, the side rollers 302, 306 and the top roller 312 may each be configured to apply a compressive load to a respective portion of the component 102. For example, a first compression actuator may be configured to move the inside roller 302 toward the outside roller 306 and the interior side surface 102a of the component 102, and a second compression actuator may be configured to move the outside roller 306 toward the inside roller 302 and the exterior side surface 102b of the component 102. In some embodiments, the compression actuators cause movement of the respective side rollers 302, 306 independent of each other such that, for example, the inside roller 302 could be moved toward the outside roller 306 without a corresponding movement of the outside roller 306 toward the inside roller 302, and vice versa. In some examples, the compression actuator 322 operates to cause simultaneous movement of the side rollers 302, 306 together with corresponding movements toward the component 102, thereby pinching the component 102, and causing the side rollers 302, 306 to move apart from each other in unison with corresponding movements away from the component 102. In some examples where the side rollers 302, 306 operate in unison to move towards each other and away from each other, the compression actuator 322 may operate to pinch the side rollers 302, 306 together so as to enhance pinching compression force.

It should be appreciated that, in embodiments, the top roller 312 may be positioned directly above a gap provided between the inside roller 302 and the outside roller 306 such that the top roller 312 and the side rollers 302, 306 simultaneously act on the same portion of the component 102. However, in other embodiments, the top roller 312 may be positioned offset from the gap provided between the side rollers 302, 306.

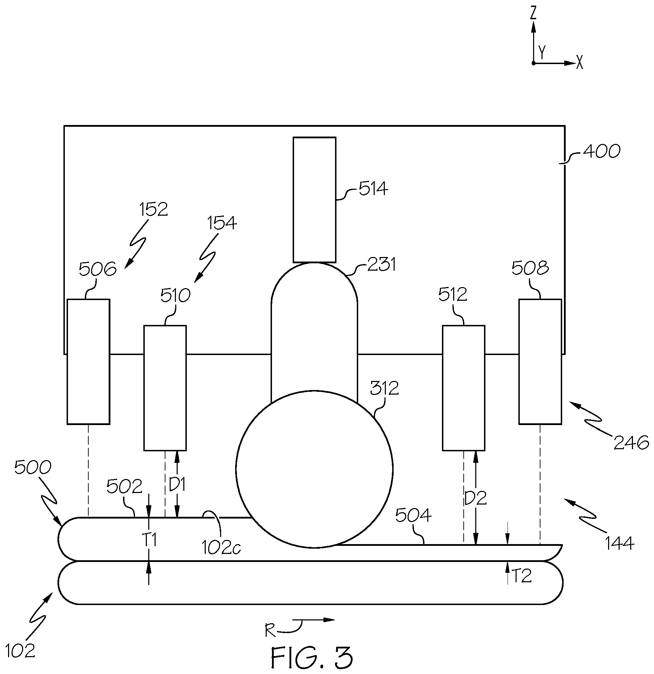

Referring now to FIG. 3, a partial side view of the compression head 246 is illustrated including the top roller 312, which is movably positionable along the Z-axis by the linear actuator 231. As shown, the top roller 312 applies a compression force against a top layer 500 defining the top surface 102c of the component 102 as the component 102 rotates in the counterclockwise direction R. Accordingly, a first thickness T1 of a first portion 502 of the top layer 500 located forward of the top roller 312, i.e., before the compression force is applied, is greater than a second thickness T2 of a second portion 504 of the top layer 500 located rearward of the top roller 312, i.e., after the compression force is applied. As used herein, the terms "forward" or "in front of' refer to a position in the same direction as a rotating direction of the build table 104 such as, for example, the counterclockwise direction R in the present embodiment, i.e., downstream. Similarly, the terms "rearward" or "behind" refer to a position opposite the rotating direction of the build table 104, i.e., upstream.

As discussed herein, one or more temperature sensors 152 and/or one or more distance sensors 154 may be provided to determine appropriate operating conditions for the deposition head 122 and/or the load source 144 such as, for example, a position of the deposition head 122 and/or the load source 144 to ensure that the feedstock material is compressed at optimal conditions.

In embodiments, the one or more temperature sensors 152 include a first temperature sensor 506 positioned forward of the top roller 312 and a second temperature sensor 508 positioned rearward of the top roller 312. The first temperature sensor 506 is supported by the frame 400 and oriented to detect a first temperature of the first portion 502 of the top layer 500 where the top roller 312 has not yet applied a compression force against the top layer 500. As discussed in more detail herein, the first temperature sensor 506 transmits a signal including the first temperature to the controller 150. Either continually or after a predetermined period of time, the first temperature sensor 506 may transmit additional signals to the controller 150 including an updated first temperature. Thus, the first temperature sensor 506 may transmit a plurality of signals to the controller 150 each including an updated first temperature. The second temperature sensor 508 is supported by the frame 400 and oriented to detect a second temperature of the second portion 504 of the top layer 500 where the top roller 312 has applied a compression force against the top layer 500. As discussed in more detail herein, the second temperature sensor 508 transmits a signal including the second temperature to the controller 150. Either continually or after a predetermined period of time, the second temperature sensor 508 may transmit additional signals to the controller 150 including an updated second temperature. Thus, the second temperature sensor 508 may transmit a plurality of signals to the controller 150 each including an updated second temperature.

It should be appreciated that the specific temperature at which the top layer 500 of the component 102 is rolled by the compression head 246 directly impacts the mechanical properties of the component 102. Specifically, applying a compressive force onto the top layer 500 of the component 102 at a temperature within a predetermined temperature range induces grain refinement within the component 102 to strengthen the component 102 and reduce the likelihood of component defects. Accordingly, the detected first temperature and the second temperature may be utilized by the controller 150 to determine an average temperature and/or a change in temperature between the first temperature and the second temperature at any given time. Based on the determined average temperature and/or the change in temperature, the controller 150 may determine that the position of the compression head 246 relative to the deposition head 122 should be adjusted. For example, if it is determined that the average temperature exceeds a predetermined average temperature range, the position of the compression head 246 may be adjusted so that the compression head 246 is positioned farther from the deposition head 122. Alternatively, if the determined average temperature is less than the predetermined average temperature range, the position of the compression head 246 may be adjusted so that the compression head 246 is positioned closer to the deposition head 122. In other embodiments, additional equipment such as, for example, a heater and a cooler, may be provided to heat and/or cool the component 102 based on the detected average temperature rather than adjusting a position of the compression head 246.

In embodiments, the one or more distance sensors 154 include a first distance sensor 510 positioned forward of the top roller 312 and a second distance sensor 512 positioned rearward of the top roller 312. The first distance sensor 510 is supported by the frame 400 and oriented to detect a first distance D1 to the first portion 502 of the of the top layer 500 prior to the top roller 312 applying a compression force against the top layer 500. The second distance sensor 512 is supported by the frame 400 and oriented to detect a second distance D2 to the second portion 504 of the of the top layer 500 after the top roller 312 applies a compression force against the top layer 500. As shown, the first distance sensor 510 is positioned between the top roller 312 and the first temperature sensor 506. However, in alternative embodiments, the first temperature sensor 506 may be positioned between the first distance sensor 510 and the top roller 312. Similarly, as shown, the second distance sensor 512 is positioned between the top roller 312 and the second temperature sensor 508. However, in alternative embodiments, the second temperature sensor 508 may be positioned between the second distance sensor 512 and the top roller 312.

As discussed in more detail herein, in embodiments, the first distance sensor 510 transmits a signal including the first distance D1 to the controller 150. Either continually or after a predetermined period of time, the first distance sensor 510 may transmit additional signals to the controller 150 including an updated first distance. Thus, the first distance sensor 510 may transmit a plurality of signals to the controller 150 each including an updated first distance. Similarly, the second distance sensor 512 transmits a signal including the second distance D2 to the controller 150. Either continually or after a predetermined period of time, the second distance sensor 512 may transmit additional signals to the controller 150 including an updated second distance. Thus, the second distance sensor 512 may transmit a plurality of signals to the controller 150 each including an updated second distance.

Either one or both of the detected first distance D1 and the second distance D2 may be utilized by the controller 150 to compute a total strain on the top layer 500 at any given time. It should be appreciated that the difference between the first distance D1 and the second distance D2 is indicative of the deformation, e.g., plastic deformation, imparted to the top layer 500 of the component 102 by the top roller 312. The amount of deformation may be utilized by the controller 150 to estimate the strain imparted on the component 102. Based on the determined total strain, the controller 150 may determine that the load applied by the top roller 312 should be adjusted such as by adjusting the position of the linear actuator 231 and thus moving the top roller 312 relative to the top layer 500. For example, if the determined total strain exceeds a predetermined strain range, the linear actuator 231 may be adjusted to move the top roller 312 away from the top layer 500 so that the strain on the top layer 500 applied by the top roller 312 is reduced. Alternatively, if the determined total strain is less than the predetermined strain range, the linear actuator 231 may be adjusted to move the top roller 312 toward the top layer 500 so that the strain on the top layer 500 is increased.

In embodiments, a load cell 514 is provided for detecting a load applied by the linear actuator 231 on the top roller 312. The load cell 514 may be integrated into the linear actuator 231, provided at a location between the linear actuator 231 and the top roller 312, or at any other suitable location for detecting a load applied to the top roller 312. The load cell 514 transmits a signal including a load to the controller 150. Either continually or after a predetermined period of time, the load cell 514 may transmit additional signals to the controller 150 including an updated load. Thus, the load cell 514 may transmit a plurality of signals to the controller 150 each including an updated load.

As discussed herein, the linear actuator 231 may be adjusted in response to the controller 150 determining that the strain on the top layer 500 exceeds or is less than a predetermined strain range. As the linear actuator 231 is operated to adjust the vertical position of the top roller 312 relative to the top layer 500, the load cell 514 will detect a load applied onto the top roller 312. When the controller 150 determines that the required load on the top roller 312 is achieved, the linear actuator 231 is deactivated.

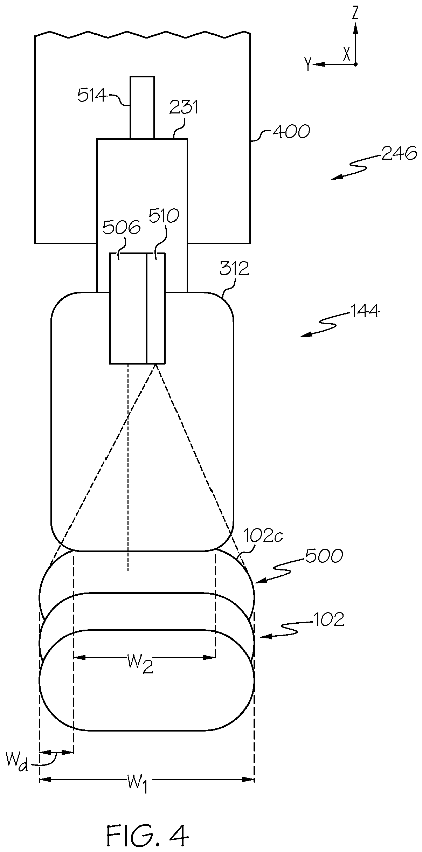

In addition to the first distance sensor 510 and the second distance sensor 512 detecting a distance to the top layer 500 of the component 102, the first distance sensor 510 and the second distance sensor 512 may also be configured to detect a width of the top layer 500 of the component 102. Specifically, as shown in FIG. 4, the first distance sensor 510 and the second distance sensor 512 may be configured to detect a total width W1 of the top layer 500 and a contact width W2 of the top layer 500, the contact width W2 of the top layer 500 being a width of the top layer 500 that is contacted by the top roller 312. The contact width W2 of the top layer 500 may be subtracted from the total width W1 of the top layer 500 to determine a width difference Wd. The width difference Wd detected by the first distance sensor 510 may then be compared to the width difference Wd detected by the second distance sensor 512 to determine an amount of deformation of the top layer 500 which, in turn, can be used as an estimate of the strain. As discussed herein, the linear actuator 231 may be adjusted to ensure that the width difference Wd remains within a predetermined width difference range.

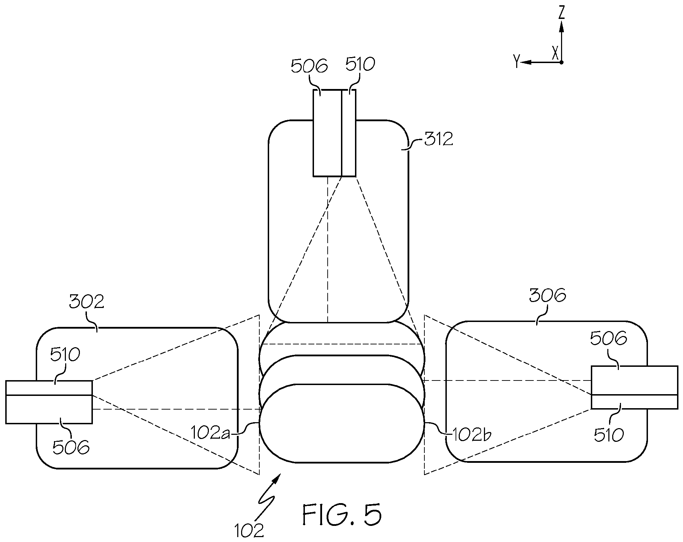

Referring now to FIG. 5, in embodiments, a separate set of temperature sensors and distance sensors may be supported by frame 400 and positioned at each of the inside roller 302 and the outside roller 306. It should be appreciated that the set of temperature sensors and distance sensors for each of the inside roller 302 and the outside roller 306 may be identical in structure and operation to the temperature sensors 506, 508, and the distance sensors 510, 512 associated with the top roller 312. Although only one temperature sensor 506 and one distance sensor 510 is illustrated for each of the inside roller 302 and the outside roller 306, it should be appreciated that two or more temperature sensors, such as temperature sensors 506, 508, and two or more distance sensors, such as distance sensors 510, 512 may be provided at the inside roller 302 and the outside roller 306 and located forward and rearward of the inside roller 302 and the outside roller 306, respectively. Accordingly, the temperature sensors 506, 508 associated with the inside roller 302 and the outside roller 306 are utilized to detect an average temperature at the interior side surface 102a of the component 102 and an exterior side surface 102b of the component 102, respectively. Similarly, the distance sensors 510, 512 associated with the inside roller 302 and the outside roller 306 are utilized to detect deformation in the deposited material which may be utilized by the controller 150 to determine the amount of strain on the interior side surface 102a of the component 102 and an exterior side surface 102b of the component 102, respectively. In embodiments, the first distance sensor 510 and the second distance sensor 512 may be configured to build a numerical and/or graphical representation of the component 102 indicating a geometry of the component.

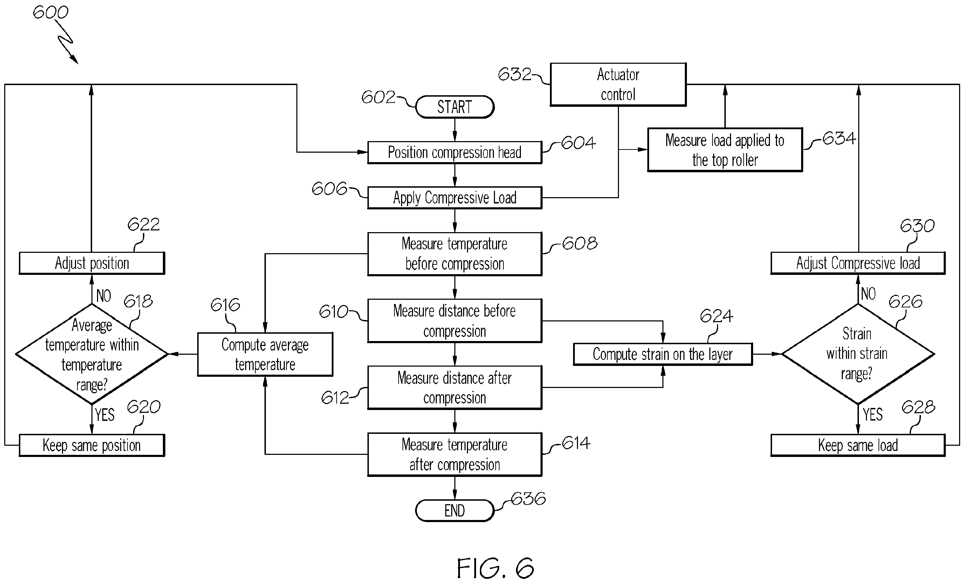

Referring now to FIG. 6, a flowchart is illustrated depicting a method 600 for determining an appropriate position of the compression head 246 relative to the deposition head 122. The method 600 is described in detail herein with reference to the system 100 illustrated in FIGS. 1-5 and, specifically, with reference to the top roller 312 applying a compression force against the top layer 500 of the component 102 being formed.

The method 600 starts at step 602 at which the build table 104 rotates and the deposition head 122 and the compression head 246 operate to form the component 102. At step 604, the compression head 246 is positioned based on baseline parameters or inputs provided by a user so as to position the compression head 246. The compression head 246 may be initially positioned by operating the actuator 212 to move the compression rig 140. At step 606, the linear actuator 231 is operated to apply a specific load or compression force on the top roller 312. As with the position of the compression head set in step 604, the initial load may be based on baseline parameters or inputs provided by a user.

At step 608, as the compression head 246 traverses the top layer 500 of the component 102, the first temperature sensor 506 detects the first temperature of the first portion 502 of the top layer 500 in front of the top roller 312, i.e., at a location of the top layer 500 prior to the top roller 312 applying a compression force, for example, downstream. The first temperature is sent by the first temperature sensor 506 to the controller 150. At step 610, as the compression head 246 traverses the top layer 500 of the component 102, the first distance sensor 510 detects the first distance D1 to the first portion 502 of the top layer 500 in front of the top roller 312. In embodiments, the first distance sensor 510 also detects both a total width W1 of the first portion 502 of the top layer 500 and a contact width W2 of the first portion 502 of the top layer 500. The first distance D1, along with the total width W1 and the contact width W2, are sent by the first distance sensor 510 to the controller 150.

At step 612, as the compression head 246 continues to traverse the top layer 500 of the component 102, the second distance sensor 512 detects the second distance D2 to the second portion 504 of the top layer 500 behind the top roller 312, i.e., at a location of the top layer 500 after the top roller 312 applies a compression force, for example, upstream. In embodiments, the second distance sensor 512 also detects both a total width W1 of the second portion 504 of the top layer 500 and a contact width W2 of the second portion 504 of the top layer 500. The second distance D2, along with the total width W1 and the contact width W2, are sent by the second distance sensor 512 to the controller 150. It should be appreciated that, in embodiments, the first distance D 1 and the second distance D2 are captured by the first distance sensor 510 and the second distance sensor 512, respectively, at the same time.

At step 614, as the compression head 246 continues to traverse the top layer 500 of the component 102, the second temperature sensor 508 detects the second temperature of the second portion 504 of the top layer 500 behind the top roller 312, i.e., at a location of the top layer 500 after the top roller 312 applies a compression force, for example, upstream. The second temperature is sent by the second temperature sensor 508 to the controller 150. It should be appreciated that, in embodiments, the first temperature and the second temperature are captured by the first temperature sensor 506 and the second temperature sensor 508, respectively, at the same time. Accordingly, in embodiments, steps 608-614 may occur simultaneously.

As discussed herein, the compression head 246 may be adjusted such that a position of the compression head 246 is moved to be closer to or farther from the deposition head 122. Additionally, the compression head 246 may be adjusted such that the compression force or load applied by the top roller 312 onto the top layer 500 is increased or decreased. Accordingly, to determine whether the position of the compression head 246 should be changed, at step 616, the controller 150 computes an average temperature based on the detected first temperature and the second temperature received from the first temperature sensor 506 and the second temperature sensor 508, respectively. In embodiments, the controller 150 may also compute a change in temperature at step 616 based on the first temperature and the second temperature detected by the first temperature sensor 506 and the second temperature sensor 508, respectively.

At step 618, the controller 150 determines whether the average temperature is within the predetermined temperature range. If it is determined that the average temperature is within the predetermined temperature range, the method 600 proceeds to step 620 at which it is determined to keep the compression head 246 at the same position relative to the deposition head 122. Alternatively, if it is determined that the average temperature is not within the predetermined temperature range, i.e., outside of the predetermined temperature range, the method 600 proceeds to step 622 at which it is determined to adjust the position of the compression head 246 relative to the deposition head 122. More specifically, at step 622, it may be determined to move the compression head 246 closer to the deposition head 122 if the average temperature is less than a lower limit of the predetermined temperature range. Alternatively, at step 622, it may be determined to move the compression head 246 farther from the deposition head 122 if the average temperature is greater than an upper limit of the predetermined temperature range. As discussed herein, applying a compressive force onto the top layer 500 of the component 102 at a temperature within a predetermined temperature range induces grain refinement within the component 102 to strengthen the component 102 and reduce the likelihood of component defects, thereby improving mechanical properties.

Additionally, in embodiments, the controller 150 may determine at step 618 whether the change in temperature is within a predetermined temperature range and proceed to step 620 if it is determined that the change in temperature is less than a lower limit of the predetermined temperature range or, alternatively, proceed to step 622 if it is determined that the change in temperature is greater than an upper limit of the predetermined temperature range. Thereafter, the method 600 returns to step 604 at which the controller 150 operates the actuator 212 to position the compression rig 140 and thus the compression head 246 relative to the deposition head 122 in accordance with the determination made at steps 620 or 622.

As discussed herein, the compression head 246 may be adjusted such that the compression force or load applied by the top roller 312 onto the top layer 500 is increased or decreased. Accordingly, to determine whether the position of the compression head 246 should be changed, at step 624, the controller 150 computes a strain based on the detected first distance D1 and the second distance D2. In embodiments, at step 624, the controller 150 may also compute the width difference Wd between the total width W1 and the contact width W2 detected by one or both of the first distance sensor 510 and the second distance sensor 512.

At step 626, the controller 150 determines whether the strain is within the predetermined strain range. If it is determined that the strain is within the predetermined strain range, the method 600 proceeds to step 628 at which it is determined to keep the linear actuator 231 in the same position so as to not change the load applied by the top roller 312. Alternatively, if it is determined that the strain is not within the predetermined strain range, i.e., outside of the predetermined strain range, the method 600 proceeds to step 630 at which point it is determined to adjust the position of the linear actuator 231 so as to change the load applied by the top roller 312. More specifically, at step 630, it may be determined to adjust the linear actuator 231 to increase the load if the detected strain is less than a lower limit of the predetermined strain range. Alternatively, at step 630, it may be determined to adjust the linear actuator 231 to decrease the load if the detected strain is greater than an upper limit of the predetermined strain range.

Additionally, in embodiments, the controller 150 may determine the strain at step 626 based on the width difference Wd between the total width W1 and contact width W2 detected by the first distance sensor 510 and/or the second distance sensor 512 and proceed to step 628 if it is determined that the width difference Wd is within a predetermined width range or, alternatively, proceed to step 630 if it is determined that the width different Wd is not within the predetermined width range. Thereafter, the method 600 proceeds to step 632 at which the controller 150 sends a signal to operate the linear actuator 231 based on the determination made in steps 626-630. After the linear actuator 231 receives the signal from the controller 150, the linear actuator 231 is operated and the method 600 proceeds to step 606 to apply the determined compressive load onto the top roller 312. The above steps repeat until it is desired to stop applying the compressive load onto the component 102, at which point the method 600 ends at step 636. At step 636, the build table 104 stops rotating and the deposition head 122 stops depositing material.

It should be appreciated that the position of the compression head 246 may be determined based on temperature data collected by only a single temperature sensor as opposed to requiring temperature data collected by both the first temperature sensor 506 and the second temperature sensor 508. In addition, the position of the top roller 312 may be determined based on distance data collected by only a single distance sensor as opposed to requiring distance data collected by both the first distance sensor 510 and the second distance sensor 512. Moreover, although the method 600 discussed herein is specific to controlling the position and compression force applied by the top roller 312, it should be appreciated that the inside roller 302 and the outside roller 306 may be similar operated in the manner discussed herein. For example, as shown in FIG. 5, position of the inside roller 302 and the outside roller 306 may be adjusted based on a detected temperature or distance by operating the actuator 212 and/or the compression actuator 322.

From the above, it is to be appreciated that defined herein is an additive manufacturing system for conducting compression of material while simultaneously conducting material deposition. The system includes a compression rig including a compression head supporting a top roller configured to apply a compressive load onto a top surface of a component, a pair of temperature sensors positioned on opposite sides of the top roller and configured to detect a temperature of the top surface of the component, and a pair of distance sensors positioned on opposite sides of the top roller and configured to detect a distance to the top surface of the component. The system further includes a controller configured to adjust a position of the compression rig and a load applied by the top roller based on the detected temperatures and distances.

Further aspects of the embodiments described herein are provided by the subject matter of the following clauses:
Clause 1. An additive manufacturing system for forming a component, the additive manufacturing system comprising: a compression rig comprising a compression head supporting a top compression device applying a compressive load onto a top surface of the component, a temperature sensor detecting a temperature of the top surface of the component, and a pair of distance sensors positioned on opposite sides of the top compression device and detecting a distance to the top surface of the component; and a controller configured to adjust a position of the compression rig and a load applied by the top compression device based on at least one of the detected temperatures and distances.
Clause 2. The additive manufacturing system of clause 1, wherein the pair of temperature sensors comprises: a first temperature sensor positioned in front of the top compression device and detecting a first temperature of a first portion of the top surface of the component; and a second temperature sensor positioned behind the top compression device and detecting a second temperature of a second portion of the top surface of the component.
Clause 3. The additive manufacturing system of clause 2, wherein the controller is configured to compute an average temperature based on the first temperature and the second temperature.
Clause 4. The additive manufacturing system of clause 3, further comprising: a deposition assembly having a deposition head through which melted feedstock material is deposited; an actuator positioning the compression head relative to the deposition head, wherein the controller is configured to: send a signal to the actuator to move the compression head closer to the deposition head in response to determining that the average temperature is below a predetermined temperature range; and send a signal to the actuator to move the compression head farther from the deposition head in response to determining that the average temperature exceeds the predetermined temperature range.
Clause 5. The additive manufacturing system of any one of clauses 1-4, wherein the pair of distance sensors comprises: a first distance sensor positioned in front of the top compression device and detecting a first distance to a first portion of the top surface of the component; and a second distance sensor positioned behind the top compression device and detecting a second distance to a second portion of the top surface of the component.
Clause 6. The additive manufacturing system of clause 5, wherein the controller is configured to compute a strain in the component based on the first distance and the second distance.
Clause 7. The additive manufacturing system of clause 6, further comprising: a linear actuator for positioning the top compression device relative to the top surface, wherein the controller is configured to: send a signal to the linear actuator to move the top compression device closer to the top surface in response to determining that the strain is below a predetermined strain range; and send a signal to the linear actuator to move the top compression device farther from the top surface in response to determining that the strain exceeds the predetermined strain range.
Clause 8. An additive manufacturing system for forming a component, the additive manufacturing system comprising: a rotary build table rotatable about a vertical axis of the rotary build table, the rotary build table defining a horizontal build surface on which the component is built; a deposition assembly having a deposition head through which melted feedstock material is deposited; a compression rig comprising a compression head supporting a top roller applying a compressive load onto a top surface of the component, a pair of temperature sensors positioned on opposite sides of the top roller and detecting a temperature of the top surface of the component, and a pair of distance sensors positioned on opposite sides of the top roller and detecting a distance to the top surface of the component; and a controller configured to adjust a position of the compression rig and a load applied by the top roller based on the detected temperatures and distances.
Clause 9. The additive manufacturing system of clause 8, wherein the pair of temperature sensors comprises: a first temperature sensor positioned in front of the top roller downstream of a direction of travel and detecting a first temperature of a first portion of the top surface of the component; and a second temperature sensor positioned behind the top roller upstream of the direction of travel and detecting a second temperature of a second portion of the top surface of the component.
Clause 10. The additive manufacturing system of clause 9, wherein the controller is configured to compute an average temperature based on the first temperature and the second temperature.
Clause 11. The additive manufacturing system of clause 10, further comprising: an actuator for positioning the compression head relative to the deposition head, wherein the controller is configured to: send a signal to the actuator to move the compression head closer to the deposition head in response to determining that the average temperature is below a predetermined temperature range; and send a signal to the actuator to move the compression head farther from the deposition head in response to determining that the average temperature exceeds the predetermined temperature range.
Clause 12. The additive manufacturing system of any one of clauses 8-12, wherein the pair of distance sensors comprises: a first distance sensor positioned in front of the top roller downstream of a direction of travel and detecting a first distance to a first portion of the top surface of the component; and a second distance sensor positioned behind the top roller upstream of the direction of travel and detecting a second distance to a second portion of the top surface of the component.
Clause 13. The additive manufacturing system of clause 12, wherein the controller is configured to compute a strain in the component based on the first distance and the second distance.
Clause 14. The additive manufacturing system of clause 13, further comprising: a linear actuator for positioning the top roller relative to the top surface, wherein the controller is configured to: send a signal to the linear actuator to move the top roller closer to the top surface in response to determining that the strain is below a predetermined strain range; and send a signal to the linear actuator to move the top roller farther from the top surface in response to determining that the strain exceeds the predetermined strain range.
Clause 15. A method of forming a component by additive manufacturing, the method comprising: applying a compressive load onto a top surface of the component by a top roller of a compression rig; and adjusting a position of the compression rig by performing at least one of: moving the compression rig farther from a deposition assembly in response to determining that an average temperature of a first temperature of the top surface in front of the top roller and a second temperature of the top surface behind the top roller exceeds a predetermined temperature range; and moving the compression rig closer to the deposition assembly in response to determining that the average temperature is less than the predetermined temperature range.
Clause 16. The method of clause 15, wherein the first temperature is detected by a first temperature sensor positioned in front of the top roller and the second temperature is detected by a second temperature sensor position behind the top roller.
Clause 17. The method of clause 15 or clause 16, further comprising: adjusting the compressive load of the top roller by performing at least one of: moving the top roller farther from the top surface in response to determining that a strain based on a first distance to the top surface in front of the top roller and a second distance to the top surface behind the top roller exceeds a predetermined strain range; and moving the top roller closer to the top surface in response to determining that a strain based on a first distance to the top surface in front of the top roller and a second distance to the top surface behind the top roller is less than the predetermined strain range.
Clause 18. The method of clause 17, wherein the first distance is detected by a first distance sensor positioned in front of the top roller and the second distance is detected by a second distance sensor position behind the top roller.
Clause 19. The method of any one of clauses 15-18, wherein the adjusting a position of the compression rig comprises operating an actuator to move the compression rig in a lateral direction.
Clause 20. The method of any one of clauses 17-19, wherein adjusting the compressive load of the top roller comprises operating a linear actuator to move the top roller in a vertical direction.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. An additive manufacturing system (100) for forming a component (102), the additive manufacturing system (100) comprising:
a compression rig (140) comprising a compression head (246) supporting a top compression device (312) applying a compressive load onto a top surface (102c) of the component (102), a temperature sensor (506, 508) detecting a temperature of the top surface (102c) of the component (102), and a pair of distance sensors (510, 512) positioned on opposite sides of the top compression device (312) and detecting a distance to the top surface (102c) of the component (102); and
a controller (150) configured to adjust a position of the compression rig (140) and a load applied by the top compression device (312) based on the detected temperatures and distances.

2. The additive manufacturing system (100) of claim 1, wherein the temperature sensor (506, 508) comprises:
a first temperature sensor (506) positioned in front of the top compression device (312) and detecting a first temperature of a first portion of the top surface (102c) of the component (102); and
a second temperature sensor (508) positioned behind the top compression device (312) and detecting a second temperature of a second portion of the top surface (102c) of the component (102).

3. The additive manufacturing system (100) of claim 2, wherein the controller (150) is configured to compute an average temperature based on the first temperature and the second temperature.

4. The additive manufacturing system (100) of claim 3, further comprising:
an actuator (212) for positioning the compression head (246) relative to a deposition head (122),
wherein the controller (150) is configured to:
send a signal to the actuator (212) to move the compression head (246) closer to the deposition head (122) in response to determining that the average temperature is below a predetermined temperature range; and
send a signal to the actuator (212) to move the compression head (246) farther from the deposition head (122) in response to determining that the average temperature exceeds the predetermined temperature range.

5. The additive manufacturing system (100) of any one of claims 1-4, wherein the pair of distance sensors (510, 512) comprises:
a first distance sensor (510) positioned in front of the top compression device (312) and detecting a first distance to a first portion of the top surface (102c) of the component (102); and
a second distance sensor (512) positioned behind the top compression device (312) and configured to detect a second distance to a second portion of the top surface (102c) of the component (102).

6. The additive manufacturing system (100) of claim 5, wherein the controller (150) is configured to compute a strain in the component (102) based on the first distance and the second distance.

7. The additive manufacturing system (100) of claim 6, further comprising:
a linear actuator (231) for positioning the top compression device (312) relative to the top surface (102c),
wherein the controller (150) is configured to:
send a signal to the linear actuator (231) to move the top compression device (312) closer to the top surface (102c) in response to determining that the strain is below a predetermined strain range; and
send a signal to the linear actuator (231) to move the top compression device (312) farther from the top surface (102c) in response to determining that the strain exceeds the predetermined strain range.

8. An additive manufacturing system (100) for forming a component (102), the additive manufacturing system (100) comprising:
a rotary build table (104) rotatable about a vertical axis of the rotary build table (104), the rotary build table (104) defining a horizontal build surface on which the component (102) is built;
a deposition assembly (120) having a deposition head (122) through which melted feedstock material is deposited;
a compression rig (140) comprising a compression head (246) supporting a top roller (312) applying a compressive load onto a top surface (102c) of the component (102), a pair of temperature sensors (506, 508) positioned on opposite sides of the top roller (312) and detecting a temperature of the top surface (102c) of the component (102), and a pair of distance sensors (510, 512) positioned on opposite sides of the top roller (312) and detecting a distance to the top surface (102c) of the component (102); and
a controller (150) configured to adjust a position of the compression rig (140) and a load applied by the top roller (312) based on the detected temperatures and distances.

9. The additive manufacturing system (100) of claim 8, wherein the pair of temperature sensors (506, 508) comprises:
a first temperature sensor (506) positioned in front of the top roller (312) and detecting a first temperature of a first portion of the top surface (102c) of the component (102); and
a second temperature sensor (508) positioned behind the top roller (312) and detecting a second temperature of a second portion of the top surface (102c) of the component (102).

10. A method of forming a component (102) by additive manufacturing, the method comprising:
applying a compressive load onto a top surface (102c) of the component (102) by a top roller (312) of a compression rig (140); and
adjusting a position of the compression rig (140) by performing at least one of:
moving the compression rig (140) farther from a deposition assembly (120) in response to determining that an average temperature of a first temperature of the top surface (102c) in front of the top roller (312) and a second temperature of the top surface (102c) behind the top roller (312) exceeds a predetermined temperature range; and
moving the compression rig (140) closer to the deposition assembly (120) in response to determining that the average temperature is less than the predetermined temperature range.

11. The method of claim 10, wherein the first temperature is detected by a first temperature sensor (506, 508) positioned in front of the top roller (312) and the second temperature is detected by a second temperature sensor (506, 508) position behind the top roller (312).

12. The method of claim 11, further comprising:
adjusting the compressive load applied by the top roller (312) by performing at least one of:
moving the top roller (312) farther from the top surface (102c) in response to determining that a strain based on a first distance to the top surface (102c) in front of the top roller (312) and a second distance to the top surface (102c) behind the top roller (312) exceeds a predetermined strain range; and
moving the top roller (312) closer to the top surface (102c) in response to determining that a strain based on a first distance to the top surface (102c) in front of the top roller (312) and a second distance to the top surface (102c) behind the top roller (312) is less than the predetermined strain range.

13. The method of claim 12, wherein the first distance is detected by a first distance sensor (510) positioned in front of the top roller (312) and the second distance is detected by a second distance sensor (512) position behind the top roller (312).

14. The method of any one of claims 10-13, wherein the adjusting a position of the compression rig (140) comprises operating an actuator (212) to move the compression rig (140) in a lateral direction.

15. The method of any one of claims 12-13, wherein adjusting the compressive load of the top roller (312) comprises operating a linear actuator (231) to move the top roller (312) in a vertical direction.
